# EUROPÄISCHE PATENTSCHRIFT

(11) **EP 2 454 330 B1**
(45) Veröffentlichungstag und Bekanntmachung des Hinweises auf die Patenterteilung: **12.06.2013**
(21) Anmeldenummer: 10708777.7
(22) Anmeldetag: 16.03.2010
(51) Int. Cl.: C09D 1/02, C09D 5/16, C09D 7/12, C09C 1/30

(54) **DISPERSION UND VERFAHREN ZUM MODIFIZIEREN EINER OBERFLÄCHE MIT HYDROPHOBIERTER KIESELSÄURE**
DISPERSION AND METHOD FOR MODIFYING A SURFACE WITH WATER REPELLENT SILICA
DISPERSION ET PROCÉDÉ DE MODIFICATION D'UNE SURFACE DOTÉE D'ACIDE SILIQUE HYDROPHOBE

(30) Priorität: 16.07.2009 EP 09165647
(43) Veröffentlichungstag der Anmeldung: 23.05.2012
(73) Patentinhaber: Evonik Degussa GmbH, 45128 Essen (DE)
(72) Erfinder: PEGGAU, Jörg, 45357 Essen (DE); JAKOB, Harald, 63594 Hasselroth (DE); LORTZ, Wolfgang, 63607 Wächtersbach (DE)
(86) Internationale Anmeldenummer: PCT/EP2010/053355
(87) Internationale Veröffentlichungsnummer: WO 2011/006684

(56) Entgegenhaltungen:
- EP-A1- 1 741 672
- EP-A1- 1 894 888
- WO-A1-2007/053266
- US-A- 6 165 258
- US-A1- 2005 192 395

## Beschreibung

Gegenstand der Erfindung sind Dispersionen, mit denen sich Oberflächen mit hydrophobierter Kieselsäure modifizieren lassen, so dass sie wasserabstoßende und gegebenenfalls auch selbstreinigende Eigenschaften erhalten, sowie ein Verfahren zum Modifizieren einer Oberfläche mit hydrophobierter Kieselsäure, bei dem keine Stäube oder Aerosole entstehen.

Seit längerem ist unter dem Begriff Lotus-Effekt bekannt, dass Oberflächen, die hydrophob sind und eine Oberflächenstruktur aufweisen, auf der sich nur kleine Kontaktpunkte für aufliegende Wassertropfen und Schmutzpartikel ergeben, wasserabstoßende und selbstreinigende Eigenschaften aufweisen. Der Begriff "selbstreinigend" bezeichnet dabei Oberflächen, von denen Schmutzpartikel durch darüber rollende Wassertropfen ohne die Wirkung von Tensiden abgelöst werden. Von besonderem Interesse sind Methoden, mit denen sich Oberflächen nachträglich so modifizieren lassen, dass die die gewünschten wasserabstoßenden und selbstreinigenden Eigenschaften erhalten.

Aus EP 1 475 426 ist bekannt, dass sich Oberflächen in der gewünschten Weise modifizieren lassen, indem eine Dispersion von hydrophoben Partikeln in einer Lösung eines Silikonwachses in einem flüchtigen Siloxan auf die Oberfläche aufgesprüht wird. Als hydrophobe Partikel lassen sich hydrophobierte Kieselsäuren verwenden. Das aus EP 1 475 426 bekannte Verfahren hat den Nachteil, dass beim Aufsprühen kieselsäurehaltige Aerosole entstehen können und die mit den hydrophoben Partikeln modifizierte Oberfläche erst mehrere Stunden nach Aufsprühen der Dispersion eine ausreichende Haftung der hydrophoben Partikel auf der Oberfläche aufweist.

WO 2007/053266 beschreibt eine Modifizierung von Oberflächen durch Aufsprühen einer Dispersion von hydrophobierter Kieselsäure in einem flüchtigen Lösungsmittel, wobei die hydrophobierte Kieselsäure durch Partikelzerkleinerung in Gegenwart eines Silazans hergestellt wird. Die in WO 2007/053266 beschriebenen Dispersionen sind nicht-wässrig und enthalten in den konkret offenbarten Ausführungsformen Decamethylcyclopentasiloxan als flüchtiges Lösungsmittel.

WO 2005/104851 beschreibt wässrige Dispersionen, die 0,5 bis 20 Gew.-% hydrophobe Kieselsäure, 0,01 bis 10 Gew.-% eines gelierenden, beziehungsweise viskositätserhöhenden Additivs und 0,1 bis 1 Gew.-% Konservierungsmittel enthalten. Das viskositätserhöhende Additiv kann ein neutralisiertes Carboxyvinylpolymer sein. WO 2005/104851 beschreibt außerdem das Aufsprühen der Dispersion auf eine Oberfläche, um auf der Oberfläche eine insektizide Wirkung zu erzielen.

Die aus dem Stand der Technik bekannten Dispersionen müssen durch Aufsprühen auf die zu modifizierende Oberfläche aufgebracht werden. Versuche, die aus dem Stand der Technik bekannten Dispersionen durch Wischen oder Streichen auf eine Oberfläche aufzutragen, verliefen unbefriedigend, da dabei nur eine ungleichmäßige Modifizierung der Oberfläche erreicht wurde und die wasserabstoßenden und selbstreinigenden Eigenschaften der modifizierten Oberfläche unbefriedigend waren.

Es besteht deshalb ein Bedarf nach Dispersionen, mit denen sich Oberflächen wirksam mit hydrophobierter Kieselsäure modifizieren lassen, ohne dass bei dem Aufbringen auf die Oberfläche kieselsäurehaltige Stäube oder Aerosole entstehen.

Es wurde nun überraschend gefunden, dass mit Dispersionen, die eine hydrophobierte Kieselsäure, einen Alkohol aus der Reihe Ethanol, 1-Propanol und 2-Propanol, Wasser und ein neutralisiertes Carboxyvinylpolymer in geeigneten Anteilen enthalten, durch tropfenfreie Auftragsverfahren, wie Wischen, Streichen, Rollen oder Tauchen, eine gleichmäßige Modifizierung von Oberflächen mit hydrophobierter Kieselsäure erreicht werden kann, so dass die Oberfläche wasserabstoßende und gegebenenfalls auch selbstreinigende Eigenschaften erhält.

Gegenstand der Erfindung sind deshalb Dispersionen zum Modifizieren einer Oberfläche mit hydrophobierter Kieselsäure, die 0,1 bis 25 Gew.-% hydrophobierte Kieselsäure, 8 bis 90 Gew.-% mindestens eines Alkohols ausgewählt aus Ethanol, 1-Propanol und 2-Propanol, 7 bis 89 Gew.-% Wasser, 0 bis 30 Gew.-% mit Wasser nicht mischbare Lösungsmittel und 0,04 bis 5 Gew.-% mindestens eines Carboxyvinylpolymers umfassen, wobei das Carboxyvinylpolymer in neutralisierter Form vorliegt.

Gegenstand der Erfindung ist außerdem ein Verfahren zum Modifizieren einer Oberfläche mit hydrophobierter Kieselsäure, bei dem eine erfindungsgemäße Dispersion mit einem tropfenfreien Auftragsverfahren auf die Oberfläche aufgebracht wird, sowie Verfahren zur Herstellung der erfindungsgemäßen Dispersion.

Die erfindungsgemäße Dispersion umfasst 0,1 bis 25 Gew.-% hydrophobierte Kieselsäure, 8 bis 90 Gew.-% mindestens eines Alkohols ausgewählt aus Ethanol, 1-Propanol und 2-Propanol, 7 bis 89 Gew.-% Wasser, 0 bis 30 Gew.-% mit Wasser nicht mischbare Lösungsmittel und 0,04 bis 5 Gew.-% mindestens eines Carboxyvinylpolymers, das in neutralisierter Form vorliegt. Die Gewichtsangabe für das Carboxyvinylpolymer bezieht sich dabei auf die Menge an Carboxyvinylpolymer vor der Neutralisierung.

Vorzugsweise umfasst die erfindungsgemäße Dispersion 0,5 bis 10 Gew.-% hydrophobierte Kieselsäure, besonders bevorzugt 0,5 bis 1,5 Gew.-%. Die erfindungsgemäße Dispersion umfasst vorzugsweise 10 bis 88 Gew.-% Alkohol, besonders bevorzugt 20 bis 88 Gew.-%. Die erfindungsgemäße Dispersion umfasst vorzugsweise 10 bis 89 Gew.-% Wasser, besonders bevorzugt 10 bis 79 Gew.-%. Die erfindungsgemäße Dispersion umfasst vorzugsweise 0 bis 10 Gew.-% mit Wasser nicht mischbare Lösungsmittel. Die erfindungsgemäße Dispersion umfasst vorzugsweise 0,1 bis 5 Gew.-% Carboxyvinylpolymer, besonders bevorzugt 0,1 bis 0,2 Gew.-%. Die erfindungsgemäße Dispersion weist vorzugsweise bei 20 °C eine Viskosität im Bereich von 3 bis 10000 mPa*s auf, besonders bevorzugt eins Viskosität im Bereich von 5 bis 1000 mPa*s.

Der Begriff Dispersion bezeichnet erfindungsgemäß eine Mischung, in der die hydrophobierte Kieselsäure verteilt in einer flüssigen Phase vorliegt, die den Alkohol und das Wasser enthält. Vorzugsweise umfasst die erfindungsgemäße Dispersion nur eine flüssige Phase. Bevorzugt sind außerdem Dispersionen, die zusätzlich zu der hydrophobierten Kieselsäure keinen weiteren Feststoff enthalten.

Der Begriff mit Wasser nicht mischbare Lösungsmittel bezeichnet Lösungsmittel, die mit Wasser nicht oder unvollständig mischbar sind, d.h. eine Mischungslücke mit Wasser aufweisen.

Hydrophobierte Kieselsäuren im Sinne der Erfindung sind Kieselsäuren, die an ihrer Oberfläche kovalent gebundene organische Reste aufweisen und von Wasser nicht benetzt werden. Hydrophobierte Kieselsäuren können durch Umsetzen von Kieselsäuren mit Organosilanen, Silazanen oder Polysiloxanen hergestellt werden. Geeignete Siliziumverbindungen zur Herstellung von hydrophobierten Kieselsäuren sind aus EP-A 0 722 992, Seite 3, Zeile 9 bis Seite 6, Zeile 6 bekannt. Besonders bevorzugt sind hydrophobierte Kieselsäuren, die durch Umsetzung einer Kieselsäure mit einer Siliziumverbindung der in EP-A 0 722 992 angeführten Verbindungsklassen (a) bis (e) und (k) bis (m) hergestellt wurden.

Vorzugsweise ist die hydrophobierte Kieselsäure eine hydrophobierte pyrogene Kieselsäure, die durch Hydrophobieren einer pyrogenen Kieselsäure hergestellt wurde. Pyrogene Kieselsäuren sind Kieselsäuren, die durch Flammenhydrolyse einer flüchtigen Siliziumverbindung hergestellt wurden. Bei einer solchen Flammenhydrolyse werden dendritische Partikel gebildet, in denen Primärpartikel einer Größe von weniger als 50 nm miteinander versintert sind. Bei Verwendung von hydrophobierter pyrogener Kieselsäure zeigen die mit der erfindungsgemäßen Dispersion modifizierten Oberflächen eine verbesserte selbstreinigende Wirkung.

Die hydrophobierte Kieselsäure weist vorzugsweise eine Methanolbenetzbarkeit von mindestens 40 auf. Die Methanolbenetzbarkeit ist ein Maß für die Hydrophobie der Kieselsäure und wird bestimmt als der Methanolgehalt einer Methanol-Wasser-Mischung in Volumenprozent, bei dem 50 % der in die Methanol-Wasser-Mischung eingebrachten hydrophobierten Kieselsäure sedimentieren. Bei einem geringeren Methanolgehalt erfolgt keine Benetzung und die hydrophobierte Kieselsäure schwimmt größtenteils auf. Bei einem höheren Methanolgehalt erfolgt weitgehende Benetzung und der größte Teil der hydrophobierten Kieselsäure sedimentiert. Bei Verwendung von hydrophobierter Kieselsäure mit einer Methanolbenetzbarkeit von mindestens 40 zeigen die mit der erfindungsgemäßen Dispersion modifizierten Oberflächen eine verbesserte selbstreinigende Wirkung.

Zur Herstellung der erfindungsgemäßen Dispersionen eignen sich die von Evonik Degussa angebotenen hydrophobierten pyrogenen Kieselsäure Aerosil@ R805, Aerosil@ R974, Aerosil@ R202, Aerosil@ R812, Aerosil@ R812S und Aerosil@ R8200, insbesondere Aerosil@ R812S.

Vorzugsweise weist die hydrophobierte Kieselsäure einen gewichtsbezogen Medianwert der Partikelgrößenverteilung im Bereich von 50 bis 800 nm auf, besonders bevorzugt von 50 bis 200 nm. Besonders bevorzugt sind hydrophobierte Kieselsäuren, bei denen weniger als 5 Gew.-% und insbesondere weniger als 1 Gew.-% der Partikel größer als 200 nm sind. Durch die Verwendung von hydrophobierten Kieselsäuren mit solchen Partikelgrößen weisen die mit der erfindungsgemäßen Dispersion modifizierten Oberflächen nur geringe oder gar keine Veränderungen in der Farbe und im Glanz auf, während bei Verwendung von hydrophobierten Kieselsäure mit größeren Partikeln die modifizierte Oberfläche matt und weißlich verfärbt erscheint.

Besonders bevorzugt sind hydrophobierte Kieselsäuren, die durch Zerkleinern von Partikeln einer hydrophobierten Kieselsäure in einer Suspension hergestellt wurden, die mindestens einen Alkohol ausgewählt aus Ethanol, 1-Propanol und 2-Propanol und mindestens ein Silazan der Formel (I) oder (II)

(I) (R¹R²R³Si)₂NR⁴

(II) cyclo- (R¹R²SiNR⁴)ₘ

enthält, wobei in den Formeln (I) und (II) die Reste R¹, R², R³ unabhängig voneinander Kohlenwasserstoffreste mit 1 bis 12 Kohlenstoffatomen sind, der Rest R⁴ Wasserstoff oder Methyl ist und m von 3 bis 8 ist. Als Silazan wird vorzugsweise Hexamethyldisilazan der Formel (I) mit R¹, R², R³ gleich Methyl und R⁴ gleich Wasserstoff verwendet. Vorzugsweise wird eine hydrophobierte pyrogene Kieselsäure deagglomeriert, d.h. die Agglomerate der Primärpartikel der pyrogenen Kieselsäure werden zerkleinert. Das Zerkleinern der Partikel kann sowohl durch Mahlen, beispielsweise einer Kugelmühle, als auch durch Scherkräfte, beispielsweise in einem Dispergator mit einer Zahnscheibe oder einer Rotor-Stator-Einheit, erfolgen. Vorzugsweise erfolgt das Zerkleinern der Partikel in einer Nassstrahlmühle, in der Strahlen der Suspension mit einer Geschwindigkeit von vorzugsweise mehr als 300 m/s, besonders bevorzugt 400 bis 1000 m/s und insbesondere 600 bis 900 m/s zur Kollision gebracht werden. Dies lässt sich erreichen, indem man die Suspension der Partikel zunächst mit einem Dispergator zerkleinert und die so erhaltene Suspension dann mit einem Druck im Bereich von 50 bis 500 MPa durch mindestens zwei Loch- oder Spaltdüsen mit einem Lochdurchmesser bzw. einer Spaltbreite im Bereich von 0,05 bis 1 mm, vorzugsweise 0,1 bis 0,5 mm, leitet, die auf einen gemeinsamen Kollisionspunkt gerichtet sind. Eine dazu geeignete Nassstrahlmühle ist aus WO 2005/063369 bekannt. Das Zerkleinern der Partikel erfolgt vorzugsweise in einer Suspension, die kein Wasser enthält, besonders bevorzugt in einer Suspension, die kein weiteres Lösungsmittel zusätzlich zu den genannten Alkoholen enthält. Durch die Verwendung von hydrophobierten Kieselsäuren, die durch eine solche Zerkleinerung von Partikeln unter Zusatz eines Silazans hergestellt wurden, weisen die mit der erfindungsgemäßen Dispersion modifizierten Oberflächen nur geringe oder gar keine Veränderungen in der Farbe und im Glanz auf bei gleichzeitig hoher selbstreinigender Wirkung. Durch die Zerkleinerung der hydrophobierten Kieselsäure in einem Alkohol aus der Reihe Ethanol, 1-Propanol und 2-Propanol wird im Vergleich zu der aus WO 2007/053266 bekannten Zerkleinerung in Decamethylcyclopentasiloxan eine Dispersion mit einem geringeren Anteil an großen Partikeln mit einer Partikelgröße von mehr als 200 nm erhalten und gleichzeitig der Energieverbrauch für die Zerkleinerung der Partikel reduziert. Durch die Zerkleinerung einer hydrophobierten pyrogenen Kieselsäure in einer Nassstrahlmühle, in der Strahlen einer Suspension der Kieselsäure zur Kollision gebracht werden, lässt sich der Anteil an Partikeln mit einer Größe von mehr als 200 nm auf weniger als 1 Gew.-% verringern.

Carboxyvinylpolymere im Sinne der Erfindung sind Polymere, die durch Polymerisation von Vinylmonomeren erhältlich sind und die Carbonsäuregruppen enthalten. Carboxyvinylpolymere in neutralisierter Form im Sinne der Erfindung sind Carboxyvinylpolymere, bei denen mehr als 50 %, bevorzugt mehr als 80 %, der Carbonsäuregruppen durch Deprotonierung neutralisiert wurden. Vorzugsweise sind in dem neutralisierten Carboxyvinylpolymer so viele Carbonsäuregruppen neutralisiert, dass eine wässrige Lösung des neutralisierten Carboxyvinylpolymers einen pH-Wert im Bereich von 6 bis 11 aufweist.

Vorzugsweise ist das Carboxyvinylpolymer mit einem Alkanolamin neutralisiert, besonders bevorzugt mit Tetrahydroxypropylethylendiamin. So neutralisierte Carboxyvinylpolymere weisen auch bei geringem Wassergehalt eine hohe Löslichkeit und eine gute Verdickungswirkung in der erfindungsgemäßen Dispersion auf und bewirken eine verbesserte Lagerstabilität und Verarbeitbarkeit der erfindungsgemäßen Dispersion.

In einer bevorzugten Ausführungsform ist das Carboxyvinylpolymer ein Copolymer, das als Monomereinheiten einerseits Acrylsäure, Methacrylsäure oder eine Mischung der beiden und andererseits mindestens einen Ester von Acrylsäure, Methacrylsäure oder einer Mischung der beiden mit einem Alkohol mit 1 bis 4 Kohlenstoffatomen umfasst. Solche Carboxyvinylpolymere wirken als nichtassoziative Verdicker und sind beispielsweise unter der Bezeichnung Aculyn® 33 von Rohm und Haas erhältlich. Dispersionen mit diesen Polymeren weisen eine hohe Lagerstabilität und eine gute Verarbeitbarkeit auf und bewirken gleichzeitig auf mit der Dispersion behandelten Oberflächen gute selbstreinigende Eigenschaften.

In einer weiteren bevorzugten Ausführungsform ist das Carboxyvinylpolymer ein quervernetztes Copolymer, das als Monomereinheiten einerseits Acrylsäure, Methacrylsäure oder eine Mischung der beiden und andererseits mindestens einen Ester von Acrylsäure, Methacrylsäure oder einer Mischung der beiden mit einem Alkohol mit 10 bis 30 Kohlenstoffatomen umfasst. Solche Carboxyvinylpolymere wirken als assoziative Verdicker und sind beispielsweise unter der Bezeichnung TEGO® Carbomer 341 ER von Evonik Goldschmidt erhältlich. Mit diesen Polymeren können hohe Lagerstabilität, gute Verarbeitbarkeit und gute selbstreinigende Eigenschaften von mit der Dispersion behandelten Oberflächen bereits bei geringeren Gehalten des Polymers in der Dispersion erzielt werden.

Die erfindungsgemäßen Dispersionen enthalten sowohl einen Alkohol, ausgewählt aus Ethanol, 1-Propanol und 2-Propanol und Mischungen davon, in einer Menge von 8 bis 90 Gew.-%, als auch Wasser in einer Menge von 7 bis 89 Gew.-%. Bei einem Alkoholanteil in der Dispersion unter 8 Gew.-% ist die Dispersion nicht mehr lagerstabil und mit einer solchen Dispersion modifizierte Oberflächen weisen eine wesentlich schlechtere selbstreinigende Wirkung auf und erscheinen auch bei Verwendung von kleinen Kieselsäurepartikeln matt und weißlich verfärbt. Liegt der Wasseranteil in der Dispersion unter 7 Gew.-%, dann weisen mit einer solchen Dispersion modifizierte Oberflächen eine wesentlich schlechtere selbstreinigende Wirkung auf und es können in der Dispersion Ausfällungen des Carboxyvinylpolymers auftreten.

Die erfindungsgemäßen Dispersionen enthalten hydrophobierte Kieselsäure in einer Menge von 0,1 bis 25 Gew.-% und mindestens ein neutralisiertes Carboxyvinylpolymer in einer Menge von 0,04 bis 5 Gew.-%. Bei geringeren Gehalten an hydrophobierter Kieselsäure oder neutralisiertem Carboxyvinylpolymer weisen mit einer solchen Dispersion modifizierte Oberflächen nicht mehr eine ausreichende selbstreihigende Wirkung auf. Bei höheren Gehalten an hydrophobierter Kieselsäure oder neutralisiertem Carboxyvinylpolymer wird die Viskositat der Dispersion so hoch, dass sie sich nur noch schlecht auf einer Oberfläche verteilen lässt.

Die erfindungsgemäßen Dispersionen können bis zu 30 Gew.-% mit Wasser nicht mischbare Lösungsmittel enthalten. Als nicht mit Wasser mischbares Lösungsmittel eignen sich dabei aliphatische, olefinische und aromatische Kohlenwasserstoffe, Ether, Ester, Ketone, Acetale, Alkohole und Polydimethylsiloxane. Geeignete aliphatische Kohlenwasserstoffe sind zum Beispiel Pentan, Hexan, Heptan, Octan, Isooctan und die als Petrolether bekannten Kohlenwasserstoffgemische. Bevorzugt werden geruchsarme aliphatische Kohlenwasserstoffgemische verwendet, die unter den Handelsnamen ShellSol® T und ShellSol® D erhältlich sind. Vorzugsweise werden mit Wasser nicht mischbare Lösungsmittel verwendet, die eine Verdunstungszahl nach DIN 53170 von weniger als 100 aufweisen. Die Menge an mit Wasser nicht mischbaren Lösungsmitteln wird vorzugsweise so gewählt, dass die Dispersion nur eine flüssige Phase umfasst. Bei Gehalten an mit Wasser nicht mischbaren Lösungsmitteln von mehr als 30 Gew.-% werden niedrig viskose Dispersionen mit zwei flüssigen Phasen erhalten, die sich nicht gleichmäßig auf Oberflächen auftragen lassen.

In einer bevorzugten Ausführungsform enthält die erfindungsgemäße Dispersion zusätzlich noch als Haftvermittler ein Polysiloxan der Formel (III) oder (IV)

(III) (CH₃)₃SiO[(CH₃)R⁵SiO]ₙSi(CH₃)₃

(IV) cyclo- [(CH₃)R⁵SiO]ₚ,

wobei in den Formeln (III) und (IV) die Reste R⁵ statistisch verteilt entweder Methylgruppen oder Kohlenwasserstoffreste mit 6 bis 24 Kohlenstoffatomen sind, wobei mindestens einer der Reste R⁵ nicht Methyl ist, n von 1 bis 100 und p von 3 bis 100 ist. In dieser Ausführungsform enthält die Dispersion nicht mehr als 30 Gew.-% Wasser. Bevorzugt weist das Polysiloxan ein Molekulargewicht von weniger als 10000 g/mol auf, besonders bevorzugt weniger als 1000 g/mol. Durch die Verwendung eines solchen Haftvermittlers wird bei einer mit der Dispersion modifizierten Oberfläche eine bessere Haftung der hydrophobierten Kieselsäure auf der Oberfläche erzielt, so dass die wasserabstoßende und selbstreinigende Eigenschaft der Oberfläche länger anhält und die Oberfläche stärker mechanisch beansprucht werden kann, ohne ihre wasserabstoßende und selbstreinigende Eigenschaften zu verlieren.

Die erfindungsgemäße Dispersion kann optional noch weitere Bestandteile enthalten, wie zum Beispiel Duftstoffe und Farbstoffe. Wenn die in einer erfindungsgemäßen Dispersion enthaltene Menge an Alkohol alleine nicht zur Konservierung der Dispersion und zur Unterdrückung von Bakterienwachstum ausreicht, kann die Dispersion noch zusätzlich Konservierungsstoffe, wie zum Beispiel 2-Methyl-4-isothiazolin-3-on, 1,2-Benzisothiazolin-3-on oder 2-Nitropropan-1,3-diol, enthalten.

Mit den erfindungsgemäßen Dispersionen lassen sich prinzipiell alle festen Oberflächen modifizieren.

Die erfindungsgemäßen Dispersionen eignen sich zum Modifizieren von harten, im Wesentlichen porenfreien Oberflächen, wie Glas, glasierter Keramik, Metall, Kunststoffen und lackierten Oberflächen. Solche Oberflächen weisen nach dem Modifizieren mit einer erfindungsgemäßen Dispersion wasserabstoßende und selbstreinigende Eigenschaften auf. Bei einer Modifizierung mit einer Dispersion, die Partikel mit einem Median der Partikelgrößenverteilung im Bereich von 50 bis 200 nm aufweist, zeigen die modifizierten Oberflächen nur geringe oder gar keine Änderungen in Glanz und Farbe, d.h. die Modifizierung der Oberfläche ist nicht sichtbar. Die beste Kombination von selbstreinigenden Eigenschaften mit geringer Veränderung im Aussehen der modifizierten Oberfläche wird mit Dispersionen erzielt, die eine hydrophobierte pyrogene Kieselsäure mit einem Median der Partikelgrößenverteilung im Bereich von 50 bis 120 nm und weniger als 2 Gew.-% Partikeln mit einer Größe von mehr als 200 nm enthalten.

Die erfindungsgemäßen Dispersionen eignen sich ebenso zum Modifizieren von harten, porösen Oberflächen, wie Stein, Beton, unglasierter Keramik oder Holz. Solche Oberflächen weisen nach dem Modifizieren mit einer erfindungsgemäßen Dispersion zusätzlich auch eine verringerte Wasseraufnahme auf, da Wassertropfen von der Oberfläche abrollen und nicht mit der Oberfläche in unmittelbaren Kontakt kommen, so dass das Wasser nicht durch Kapillarkräfte in die Poren aufgenommen wird. Die erfindungsgemäßen Dispersionen haben dabei gegenüber den aus dem Stand der Technik bekannten Dispersionen den Vorteil, dass sie bei porösen Oberflächen nicht zu einer länger andauernden Verfärbung der modifizierten Oberfläche führen.

Die erfindungsgemäßen Dispersionen können ebenso gut aber auch zum Modifizieren von flexiblen Oberflächen, wie Leder, Papier oder Textilien verwendet werden.

In Abhängigkeit von der auf die Oberfläche aufgebrachten Menge an hydrophobierter Kieselsäure können mit den erfindungsgemäßen Dispersionen zusätzlich zu der wasserabstoßenden und selbstreinigenden Wirkung auch weitere Wirkungen erzielt werden, zum Beispiel die aus WO 2005/104851 bekannte insektizide und Milben abtötende Wirkung.

Die erfindungsgemäßen Dispersionen haben gegenüber den aus WO 2007/053266 bekannten Dispersionen zusätzlich den Vorteil, dass sie auch auf feuchte Oberflächen aufgebracht werden können, ohne dass die Dispersion dazu ein wasserbindendes Reaktivlösemittel enthalten muss. Die erfindungsgemäßen Dispersionen können deshalb unmittelbar im Anschluss an eine wässrige Reinigung einer Oberfläche zur Modifizierung der Oberfläche eingesetzt werden, ohne dass eine Trocknung der Oberfläche abgewartet werden muss.

Die erfindungsgemäßen Dispersionen haben gegenüber den aus dem Stand der Technik bekannten Dispersionen den Vorteil, dass sie nicht auf die Oberfläche aufgesprüht werden müssen, um der Oberfläche eine selbstreinigende Wirkung zu verleihen, sondern auch bei einem Aufbringen auf eine Oberfläche durch ein tropfenfreies Auftragsverfahren die Oberfläche so modifizieren, dass sie wasserabstoßende und selbstreinigende Eigenschaften erhält.

Die Erfindung bezieht sich deshalb auch auf ein Verfahren zum Modifizieren einer Oberfläche mit hydrophobierter Kieselsäure, bei dem eine erfindungsgemäße Dispersion mit einem tropfenfreien Auftragsverfahren auf die Oberfläche aufgebracht wird. Vorzugsweise wird die Dispersion durch Wischen mit einem Lappen oder Schwamm, durch Streichen mit einem Pinsel oder einer Bürste oder durch Rollen mit einer Auftragswalze auf die Oberfläche aufgebracht. Alternativ kann die Dispersion auch dadurch auf die Oberfläche aufgebracht werden, dass man die Oberfläche in die Dispersion eintaucht und überschüssige Dispersion von der Oberfläche ablaufen lässt.

Das erfindungsgemäße Verfahren zum Modifizieren einer Oberfläche hat gegenüber den aus dem Stand der Technik bekannten Verfahren den Vorteil, dass bei der Modifizierung der Oberfläche keine kieselsäurehaltigen Stäube oder Aerosole auftreten können, so dass auch bei der Verwendung von hydrophobierten Kieselsäuren mit geringen Partikelgrößen eine Aufnahme der Partikel in die Lunge während der Verarbeitung ohne zusätzliche Schutzmaßnahmen vermieden werden kann.

Die erfindungsgemäßen Dispersionen und das erfindungsgemäße Verfahren zum Modifizieren einer Oberfläche können Oberflächen so mit hydrophobierter Kieselsäure modifizieren, dass die Partikel der hydrophobierten Kieselsäure an der Oberfläche haften und durch Wind, Regen oder über die Oberfläche laufendes Wasser nicht oder nur in geringem Umfang abgelöst werden. Die Modifizierung der Oberfläche ist damit wetterbeständig und beständig gegen ein Abspülen mit Wasser. Die erfindungsgemäßen Dispersionen haben dabei im Vergleich zu den aus EP 1 475 426 und WO 2007/053266 bekannten Dispersionen den Vorteil, dass eine feste Haftung der Partikel auf der Oberfläche und damit eine Wetterbeständigkeit bereits nach kürzerer Zeit, in der Regel innerhalb von wenigen Minuten nach dem Aufbringen der Dispersion auf die Oberfläche, erreicht wird.

Die Partikel der hydrophobierten Kieselsäure lassen sich jedoch mechanisch, z.B. durch Reiben oder mit einem Hochdruckwasserstrahl, oder durch wässrige Tensidlösungen wieder von der Oberfläche ablösen. Die erfindungsgemäßen Dispersionen und das erfindungsgemäße Verfahren zum Modifizieren einer Oberfläche ermöglichen es damit, eine Oberfläche wiederholt zu reinigen und erneut mit wasserabstoßenden und selbstreinigenden Eigenschaften auszustatten, ohne dass es dabei im Lauf der Zeit zu einer Akkumulation von Stoffen auf der Oberfläche kommt.

Die erfindungsgemäßen Dispersionen und das erfindungsgemäße Verfahren zum Modifizieren einer Oberfläche eignen sich besonders zum Behandeln von Fahrzeuglacken und Fahrzeugteilen, um eine Wiederverschmutzung nach einer Wäsche zu vermeiden und eine Reinigung der Oberfläche durch auftreffenden Regen zu erzielen. Sie eignen sich in gleicher Weise auch zur Behandlung von Gebäudefassaden, Dächern, Fensteraußenseiten und Solarzellen. Bei einer Behandlung der Oberfläche von Solarzellen werden zusätzlich Verluste im Wirkungsgrad durch eine Verschmutzung der Oberfläche der Solarzellen vermieden.

Die erfindungsgemäßen Dispersionen und das erfindungsgemäße Verfahren zum Modifizieren einer Oberfläche eignen sich darüber hinaus, um Oberflächen nach einer Reinigung hygienisch zu erhalten, da durch die wasserabstoßende Wirkung eine Benetzung der modifizierten Oberfläche mit Wasser verhindert wird und so eine Vermehrung von Bakterien oder Schimmelpilzen auf der Oberfläche verhindert oder verzögert wird.

Die Herstellung der erfindungsgemäßen Dispersionen erfolgt vorzugsweise mit einem Verfahren, bei dem in einem ersten Schritt Partikel einer hydrophobierten Kieselsäure in einer Suspension, die mindestens einen Alkohol ausgewählt aus Ethanol, 1-Propanol und 2-Propanol und mindestens ein Silazan der oben definierten Formeln (I) oder (II) enthält, zerkleinert werden, bis der Medianwert der Partikelgrößenverteilung im Bereich von 50 bis 800 nm, bevorzugt 50 bis 200 nm, liegt. Das Zerkleinern der Partikel kann sowohl durch Mahlen, beispielsweise in einer Kugelmühle, als auch durch Scherkräfte, beispielsweise in einem Dispergator mit einer Zahnscheibe oder einer Rotor-Stator-Einheit, erfolgen. Vorzugsweise erfolgt das Zerkleinern der Partikel in einer Nassstrahlmühle, in der Strahlen der Suspension mit einer Geschwindigkeit von vorzugsweise mehr als 300 m/s, besonders bevorzugt 400 bis 1000 m/s und insbesondere 600 bis 900 m/s zur Kollision gebracht werden. Dazu wird bevorzugt die Suspension der Partikel zunächst mit einem Dispergator zerkleinert und die so erhaltene Suspension dann mit einem Druck im Bereich von 50 bis 500 MPa durch mindestens zwei Loch- oder Spaltdüsen mit einem Lochdurchmesser bzw. einer Spaltbreite im Bereich von 0,05 bis 1 mm, vorzugsweise 0,1 bis 0,5 mm, geleitet, die auf einen gemeinsamen Kollisionspunkt gerichtet sind. Das Zerkleinern der Partikel erfolgt vorzugsweise in einer Suspension, die kein Wasser enthält, besonders bevorzugt in einer Suspension, die kein weiteres Lösungsmittel zusätzlich zu den genannten Alkoholen enthält. Besonders beorzugt wird eine hydrophobierte pyrogene Kieselsäure deagglomeriert, d.h. die Agglomerate der Primärpartikel der pyrogenen Kieselsäure werden zerkleinert. Die Zerkleinerung der Partikel von hydrophobierter Kieselsäure erfolgt vorzugsweise bei einem Gehalt der Suspension an hydrophobierter Kieselsäure im Bereich von 5 bis 30 Gew.-%. Durch die Wahl eines solchen Gehalts lassen sich schon bei geringem Energieeintrag besonders kleine Partikel erhalten.

Zur Herstellung von erfindungsgemäßen Dispersionen, die mehr als 40 Gew.-% Wasser enthalten, wird die im ersten Schritt erhaltene Suspension dann zu einer wässrigen Lösung eines neutralisierten Carboxyvinylpolymers gegeben. Die wässrige Lösung des neutralisierten Carboxyvinylpolymers kann einen der im ersten Schritt verwendeten Alkohole enthalten.

Die Herstellung von erfindungsgemäßen Dispersionen, die weniger als 40 Gew.-% Wasser enthalten, erfolgt dagegen bevorzugt mit den weiteren Schritten Herstellung einer konzentrierten wässrigen Lösung eines neutralisierten Carboxyvinylpolymers, Zugabe der erhaltenen Lösung zu einem Medium, das mehr als 60 Gew.-% mindestens eines Alkohols aus der Reihe Ethanol, 1-Propanol und 2-Propanol enthält, und Zugabe der Suspension aus dem ersten Schritt zu der dabei erhaltenen Mischung.

Die wässrige Lösung des neutralisierten Carboxyvinylpolymers wird vorzugsweise hergestellt, indem eine wässrige Dispersion des Carboxyvinylpolymers mit Neutralisierungsmittel versetzt und gerührt wird, bis der pH-Wert der Dispersion im Bereich von 7 bis 9 liegt und das Carboxyvinylpolymer in Lösung gegangen ist.

Die mit dem erfindungsgemäßen Verfahren hergestellten Dispersionen weisen eine hohe Stabilität der Dispersion auf und ergeben nach dem Auftragen auf eine Oberfläche eine besonders hohe wasserabstoßende und selbstreinigende Wirkung.

Die nachfolgenden Beispiele illustrieren die Erfindung, ohne jedoch den Gegenstand der Erfindung zu beschränken.

### Beispiele

### Zerkleinern von hydrophobierter Kieselsäure in Gegenwart von Hexamethyldisilazan

### Beispiel 1 (nicht erfindungsgemäß)

Eine Dispersion von hydrophobierter pyrogener Kieselsäure Aerosil@ R 812 S in Decamethylcyclopentasiloxan wurde wie in WO 2007/053266 in Example Q in den Absätzen [0179] und [0181] beschrieben hergestellt. Der Medianwert der Partikelgrößenverteilung, bestimmt durch Laserstreuung mit einem Gerät Horiba LA-910, betrug 190 nm. Der Anteil an Partikeln mit einer Partikelgröße von mehr als 200 nm betrug 45 Gew.-%.

### Beispiel 2 (nicht erfindungsgemäß)

Beispiel 1 wurde wiederholt wie in WO 2007/053266 in Example Y in den Absätzen [0182] und [0183] beschrieben.

### Beispiel 3

Zu einer Lösung von 2 g Hexamethyldisilazan in 798 g Ethanol wurden unter Rühren 200 g hydrophobierte pyrogene Kieselsäure Aerosil@ R 812 S gegeben und mit einem Dispergiergerät Dissolver Dispermat® der Firma VMA-Getzmann GmbH mit einer Zahnscheibe mit 70 mm Durchmesser für 15 Minuten bei 2200 min⁻¹ dispergiert. Die erhaltene Suspension wurde dann in einer Nassstrahlmühle mit einer Strahlgeschwindigkeit von 700 m/s vermahlen, wobei die Nassstrahlmühle drei in einer Ebene unter Winkeln von 120° angeordnete und auf einen gemeinsamen Kollisionspunkt ausgerichtete Düsen aufwies. Der Medianwert der Partikelgrößenverteilung, bestimmt durch Laserstreuung mit einem Gerät Horiba LA-910, betrug danach 84 nm. Es wurden keine Partikel mit einem Durchmesser von mehr als 200 nm gefunden.

### Beispiel 4

Die in Beispiel 3 erhaltene Suspension wurde mit weiteren 332 g Ethanol verdünnt.

### Herstellung einer konzentrierten wässrigen Lösung eines neutralisierten Carboxyvinylpolymers

### Beispiel 5

In 365 g Wasser wurden unter Rühren langsam 10 g des Carboxyvinylpolymers TEGO® Carbomer 341 ER eingestreut und gleichmäßig suspendiert. Nach 30 min Rühren wurde eine Mischung aus 12,5 g Tetrahydroxypropylethylendiamin und 112,5 g Ethanol unter Rühren zugegeben, worauf sich eine klare viskose Lösung bildete, die einen pH-Wert von 7 aufwies.

### Dispersionen zum Modifizieren einer Oberfläche

### Beispiel 6 (nicht erfindungsgemäß)

Wie in WO 2007/053266 für Treatment Composition Example 15 in Absatz [0188] beschrieben wurden 10 Gewichtsteile der in Beispiel 1 erhaltenen Dispersion mit 90 Gewichtsteilen Decamethylcyclopentasiloxan gemischt. Es wurde eine dünnflüssige Dispersion erhalten, aus der sich bei der Lagerung ein Teil der dispergierten Kieselsäure absetzte.

### Beispiel 7 (nicht erfindungsgemäß)

Wie in WO 2007/053266 für Treatment Composition Example 13 in Absatz [0188] beschrieben wurden 10 Gewichtsteile der in Beispiel 2 erhaltenen Dispersion mit 90 Gewichtsteilen Decamethylcyclopentasiloxan gemischt. Es wurde eine dünnflüssige Dispersion erhalten, aus der sich bei der Lagerung ein Teil der dispergierten Kieselsäure absetzte.

### Beispiel 8

Zu einer Mischung aus 86,5 g Wasser und 1,0 g Ethanol wurden unter Rühren 2,5 g der Lösung aus Beispiel 5 gegeben. Die erhaltene klare viskose Lösung wurde unter Rühren mit 10,0 g der Suspension aus Beispiel 4 versetzt. Es wurde eine viskose Dispersion erhalten, aus der sich bei der Lagerung nichts absetzte.

### Beispiel 9 (nicht erfindungsgemäß)

Zu einer Mischung aus 87,5 g Wasser und 1,0 g Ethanol wurden unter Rühren 1,5 g der Lösung aus Beispiel 5 gegeben. Die erhaltene klare viskose Lösung wurde unter Rühren mit 10,0 g der Suspension aus Beispiel 4 versetzt. Es wurde eine Dispersion erhalten, aus der sich bei der Lagerung ein Teil der hydrophobisierten Kieselsäure absetzte.

### Beispiel 10

Zu einer Mischung aus 77,6 g Wasser und 16,5 g Ethanol wurden unter Rühren 2,5 g der Lösung aus Beispiel 5 gegeben. Die erhaltene klare viskose Lösung wurde unter Rühren mit 3,4 g der Suspension aus Beispiel 4 versetzt. Es wurde eine viskose Dispersion erhalten, aus der sich bei der Lagerung nichts absetzte.

### Beispiel 11

Zu einer Mischung aus 75,0 g Wasser und 16,6 g Ethanol wurden unter Rühren 5,0 g der Lösung aus Beispiel 5 gegeben. Die erhaltene klare viskose Lösung wurde unter Rühren mit 3,4 g der Suspension aus Beispiel 4 versetzt. Es wurde eine viskose Dispersion erhalten, aus der sich bei der Lagerung nichts absetzte.

### Beispiel 12

Zu einer Mischung aus 45,0 g Wasser und 42,5 g Ethanol wurden unter Rühren 5,0 g der Lösung aus Beispiel 5 gegeben. Die erhaltene klare viskose Lösung wurde unter Rühren mit 7,5 g der Suspension aus Beispiel 4 versetzt. Es wurde eine viskose Dispersion erhalten, aus der sich bei der Lagerung nichts absetzte.

### Beispiel 13

Zu einer Mischung aus 7,5 g Wasser, 82,15 g Ethanol und 0,35 g Cetylmethicon TEGOPREN® 6801 wurden unter Rühren 5,0 g der Lösung aus Beispiel 5 gegeben. Die erhaltene klare viskose Lösung wurde unter Rühren mit 5,0 g der Suspension aus Beispiel 4 versetzt. Es wurde eine viskose Dispersion erhalten, aus der sich bei der Lagerung nichts absetzte.

### Beispiel 14 (nicht erfindungsgemäß)

Zu einer Mischung aus 2,5 g Wasser, 87,15 g Ethanol und 0,35 g Cetylmethicon TEGOPREN® 6801 wurden unter Rühren 5,0 g der Lösung aus Beispiel 5 gegeben. Die erhaltene Mischung wurde unter Rühren mit 5,0 g der Suspension aus Beispiel 4 versetzt. Es wurde eine dünnflüssige Dispersion erhalten, aus der sich bei der Lagerung Feststoff absetzte.

### Beispiel 15

Zu einer Mischung aus 25,0 g Wasser, 64,65 g Ethanol und 0,35 g Cetylmethicon TEGOPREN® 6801 wurden unter Rühren 5,0 g der Lösung aus Beispiel 5 gegeben. Die erhaltene klare viskose Lösung wurde unter Rühren mit 5,0 g der Suspension aus Beispiel 3 versetzt. Es wurde eine viskose Dispersion erhalten, aus der sich bei der Lagerung nichts absetzte.

### Beispiel 16

Zu einer Mischung aus 6,5 g Wasser, 66,5 g Ethanol, 10,0 g Decamethylcyclopentasiloxan und 0,35 g Cetylmethicon TEGOPREN® 6801 wurden unter Rühren 10,0 g der Lösung aus Beispiel 5 gegeben. Die erhaltene klare viskose Lösung wurde unter Rühren mit 6,65 g der Suspension aus Beispiel 4 versetzt. Es wurde eine viskose Dispersion erhalten, aus der sich bei der Lagerung nichts absetzte.

### Beispiel 17

Zu einer Mischung aus 4,25 g Wasser, 72,0 g Ethanol, 10,0 g Decamethylcyclopentasiloxan und 0,35 g Cetylmethicon TEGOPREN® 6801 wurden unter Rühren 10,0 g der Lösung aus Beispiel 5 gegeben. Die erhaltene klare viskose Lösung wurde unter Rühren mit 3,4 g der Suspension aus Beispiel 4 versetzt. Es wurde eine viskose Dispersion erhalten, aus der sich bei der Lagerung nichts absetzte.

### Beispiel 18

Zu einer Mischung aus 6,75 g Wasser, 76,0 g Ethanol, 6,0 g Mineralöl ShellSol® D60 und 0,35 g Cetylmethicon TEGOPREN® 6801 wurden unter Rühren 7,5 g der Lösung aus Beispiel 5 gegeben. Die erhaltene klare viskose Lösung wurde unter Rühren mit 3,4 g der Suspension aus Beispiel 4 versetzt. Es wurde eine viskose Dispersion erhalten, aus der sich bei der Lagerung nichts absetzte.

### Beispiel 19 (nicht erfindungsgemäß)

Zu einer Mischung aus 30,0 g Wasser, 9,65 g Ethanol, 40,0 g Decamethylcyclopentasiloxan und 0,35 g Cetylmethicon TEGOPREN® 6801 wurden unter Rühren 10,0 g der Lösung aus Beispiel 5 gegeben. Die erhaltene Mischung wurde unter Rühren mit 10,0 g der Suspension aus Beispiel 4 versetzt. Es wurde eine dünnflüssige Dispersion mit zwei flüssigen Phasen erhalten.

In Tabelle 1 sind die Anteile an hydrophobierter Kieselsäure Aerosil@ R 812 S, Ethanol, Wasser, mit Wasser nicht mischbare Lösungsmittel, Carboxyvinylpolymer TEGO® Carbomer 341 ER und Haftvermittler TEGOPREN® 6801 in den Dispersionen der Beispiele 6 bis 19 zusammengefasst.

**Tabelle 1**

| Anteile an der Dispersionen in Gew.-% | | | | | | |
|---|---|---|---|---|---|---|
| Beispiel | Aerosil® R 812 S | Ethanol | Wasser | LM** | TEGO® Carbomer 341 ER | TEGOPREN® 6801 |
| 6* | 0,5 | | | 99,4 | | |
| 7* | 0,5 | | | 99,5 | | |
| 8 | 1,5 | 10,0 | 88,3 | | 0,05 | |
| 9* | 1,5 | 9,8 | 88,6 | | 0,03 | |
| 10 | 0,51 | 19,9 | 79,4 | | 0,05 | |
| 11 | 0,51 | 20,6 | 78,7 | | 0,1 | |
| 12 | 1,13 | 50,0 | 48,7 | | 0,1 | |
| 13 | 0,75 | 87,5 | 11,2 | | 0,1 | 0,35 |
| 14* | 0,75 | 92,5 | 6,2 | | 0,1 | 0,35 |
| 15 | 1,0 | 69,8 | 28,7 | | 0,1 | 0,35 |
| 16 | 1,0 | 74,4 | 13,8 | 10,0 | 0,2 | 0,35 |
| 17 | 0,51 | 77,1 | 11,6 | 10,0 | 0,2 | 0,35 |
| 18 | 0,51 | 80,6 | 12,2 | 6,0 | 0,15 | 0,35 |
| 19* | 1,5 | 20,4 | 37,3 | 40,0 | 0,2 | 0,35 |

| | | | | | | |
|---|---|---|---|---|---|---|
| *nicht erfindungsgemäß ** LM = Decamethylcyclopentasiloxan, außer für Beispiel 18 mit LM = ShellSol® D60 | | | | | | |

### Modifizieren von Oberflächen mit Kieselsäuredispersionen

Die Dispersionen wurden in allen Versuchen mit einem 2 cm breiten Pinsel mit Kunststoffborsten auf die Oberfläche aufgetragen. Die Auftragsmenge lag jeweils bei ca. 100 g/m². Die behandelten Oberflächen wurden zum Trocknen senkrecht aufgestellt. Die Trocknungszeit wurde visuell bestimmt als der Zeitpunkt, ab dem die Oberfläche beim Trocknen nicht mehr feucht erschien. Das Aussehen der behandelten Oberfläche wurde nach der Trocknungszeit beurteilt. Der Kontaktwinkel von Wassertropfen auf der Oberfläche wurde mit Wassertropfen von 50 µl Volumen auf horizontaler Oberfläche optisch mit einem Kontaktwinkelmessgerät OCA35 der Firma DataPhysics Instruments GmbH bestimmt. Das Ablaufen von Wasser von der Oberfläche wurde bestimmt, indem Wassertropfen von 50 µl Volumen auf die horizontale Oberfläche aufgebracht wurden, die Oberfläche dann unter einem Winkel von 45° geneigt wurde und das Abrollen der Wassertropfen nach den Kriterien von Tabelle 2 visuell beurteilt wurde. Die Haltbarkeit der Modifizierung wurde bestimmt, indem Wasser in Portionen von 2 l aus einem Messzylinder so lange über eine behandelte und unter einem Winkel von 45° geneigte Oberfläche gegossen wurde, bis Wassertropfen mit einem Kontaktwinkel von weniger als 90° an der Oberfläche haften blieben.

**Tabelle 2**

| Bewertung des Abrollens von Wassertropfen von einer behandelten Oberfläche | |
|---|---|
| Visuell beobachtetes Abrollverhalten | Bewertung |
| Alle Wassertropfen rollen ab | 1 |
| Wassertropfen rollen ab und haften nur gelegentlich an der Oberfläche | 2 |
| Wassertropfen rollen ab und haften an einigen Stellen der Oberfläche | 3 |
| Wassertropfen rollen ab und haften an zahlreichen Stellen der Oberfläche | 4 |
| Die meisten Wassertropfen haften an der Oberfläche, nur wenige rollen ab | 5 |
| Alle Wassertropfen haften an der Oberfläche | 6 |

### Beispiel 20

Eine unbehandelte gehobelte Holzoberfläche wurde mit unterschiedlichen Kieselsäuredispersion modifiziert und die Trocknungszeit, das Aussehen, der Kontaktwinkel von Wassertropfen und das Abrollen von Wassertropfen wurden mit den oben genannten Methoden bestimmt. Die Resultate sind in Tabelle 3 zusammengefasst.

**Tabelle 3**

| Modifizieren einer Holzoberfläche mit Kieselsäuredispersionen | | | | |
|---|---|---|---|---|
| Kieselsäuredispersion | Trocknungszeit | Aussehen | Kontaktwinkel | Abrollen von Wassertropfen |
| Beispiel 6* | > 3 h | Farbveränderung | < 90° | 4 |
| Beispiel 7* | > 3 h | Farbveränderung | < 90° | 4 |
| Beispiel 8 | 15 min | Unverändert | > 140° | 3 |
| Beispiel 13 | 15 min | Unverändert | > 140° | 2 |
| Beispiel 15 | 15 min | Unverändert | > 140° | 2 |
| Beispiel 16 | 10 min | Unverändert | > 140° | 2 |

| | | | | |
|---|---|---|---|---|
| *nicht erfindungsgemäß | | | | |

### Beispiel 21

Eine unbehandelte Sandsteinoberfläche wurde mit unterschiedlichen Kieselsäuredispersion modifiziert und die Trocknungszeit, das Aussehen, der Kontaktwinkel von Wassertropfen und das Abrollen von Wassertropfen wurden mit den oben genannten Methoden bestimmt. Die Resultate sind in Tabelle 4 zusammengefasst.

**Tabelle 4**

| Modifizieren einer Sandsteinoberfläche mit Kieselsäuredispersionen | | | | |
|---|---|---|---|---|
| Kieselsäuredispersion | Trocknungszeit | Aussehen | Kontaktwinkel | Abrollen von Wassertropfen |
| Beispiel 6* | > 3 h | Farbver*änderung | < 90° | 4 |
| Beispiel 7* | > 3 h | Farbveränderung | < 90° | 4 |
| Beispiel 8 | 15 min | Unverändert | > 140° | 5 |
| Beispiel 13 | 15 min | Unverändert | > 140° | 2 |
| Beispiel 15 | 15 min | Unverändert | > 140° | 2 |
| Beispiel 16 | 10 min | Unverändert | > 140° | 2 |

| | | | | |
|---|---|---|---|---|
| *nicht erfindungsgemäß | | | | |

### Beispiel 22

Eine mit Kunststofffolie beschichtete Holzoberfläche wurde mit unterschiedlichen Kieselsäuredispersionen modifiziert und die Trocknungszeit, der Kontaktwinkel von Wassertropfen und die Haltbarkeit der Modifizierung wurden mit den oben genannten Methoden bestimmt. Die Resultate sind in Tabelle 5 zusammengefasst.

**Tabelle 5**

| Modifizieren einer mit Kunststofffolie beschichteten Holzoberfläche mit Kieselsäuredispersionen | | | |
|---|---|---|---|
| Kieselsäuredispersion | Trocknungszeit | Kontaktwinkel | Haltbarkeit |
| Beispiel 6* | > 3 h | > 140° | 6 l |
| Beispiel 7* | | | 2 l |
| Beispiel 15 | 15 min | > 140° | 20 l |

| | | | |
|---|---|---|---|
| *nicht erfindungsgemäß | | | |

### Beispiel 23

Eine Glasoberfläche wurde mit unterschiedlichen Kieselsäuredispersion modifiziert und die Trocknungszeit, das Aussehen, der Kontaktwinkel von Wassertropfen und die Haltbarkeit der Modifizierung wurden mit den oben genannten Methoden bestimmt. Die Resultate sind in Tabelle 6 zusammengefasst.

**Tabelle 6**

| Modifizieren einer Glasoberfläche mit Kieselsäuredispersionen | | | | |
|---|---|---|---|---|
| Kieselsäuredispersion | Trocknungszeit | Aussehen | Kontaktwinkel | Haltbarkeit |
| Beispiel 6* | > 3 h | Ungleichmäßig weißlich | > 140° | 2 l |
| Beispiel 16 | 30 min | Kaum sichtbar > weißlich | 140° | > 40 l |

| | | | | |
|---|---|---|---|---|
| *nicht erfindungsgemäß | | | | |

Die Beispiele 20 und 21 zeigen, dass sich mit den erfindungsgemäßen Dispersionen im Gegensatz zu den aus WO 2007/053266 bekannten Dispersionen auch auf porösen, saugenden Oberflächen durch Aufbringen der Dispersion mit einem Pinsel eine wasserabstoßende Modifizierung der Oberfläche erreichen lässt, ohne dass sich das Aussehen der Oberfläche wesentlich verändert.

Die Beispiele 22 und 23 zeigen, dass die erfindungsgemäßen Dispersionen im Gegensatz zu den aus WO 2007/053266 bekannten Dispersionen auf nichtporösen Oberflächen rascher und gleichmäßiger auftrocknen und eine haltbarere Modifizierung bewirken.

### Beispiel 24 (nicht erfindungsgemäß)

Eine Mischung aus 15 Gew.-% hydrophobierter pyrogener Kieselsäure Aerosil@ R 812 S, 82 Gew.-% Decamethylcyclopentasiloxan und 3 Gew.-% Hexamethyldisilazan wurde zweimal wie in Beispiel 3 beschrieben in einer Nassstrahlmühle vermahlen. Der Medianwert der Partikelgrößenverteilung, bestimmt durch Laserstreuung mit einem Gerät Horiba LA-910, betrug nach dem ersten Vermahlen 286 nm und nach dem zweiten Vermahlen 132 nm. Der Anteil an Partikeln mit einer Partikelgröße von mehr als 200 nm betrug nach dem ersten Vermahlen 93 Gew.-% und nach dem zweiten Vermahlen 6 Gew.-%. Die erhaltene Dispersion wurde mit 2 Gewichtsteilen Decamethylcyclopentasiloxan gemischt. Es wurde eine dünnflüssige Dispersion erhalten, aus der sich bei der Lagerung ein Teil der dispergierten Kieselsäure absetzte. Das Beispiel zeigt, dass die aus WO 2007/053266 bekannten Dispersionen in Decamethylcyclopentasiloxan auch bei Dispergieren in einer Nassstrahlmühle nicht lagerstabil sind.

## Patentansprüche

1. Dispersion zum Modifizieren einer Oberfläche mit hydrophobierter Kieselsäure, umfassend
0,1 bis 25 Gew.-% hydrophobierte Kieselsäure,
8 bis 90 Gew.-% mindestens eines Alkohols ausgewählt aus Ethanol, 1-Propanol und 2-Propanol,
7 bis 89 Gew.-% Wasser,
0 bis 30 Gew.-% mit Wasser nicht mischbare Lösungsmittel, und
0,04 bis 5 Gew.-% mindestens eines Carboxyvinylpolymers,
wobei das Carboxyvinylpolymer in neutralisierter Form vorliegt.

2. Dispersion gemäß Anspruch 1,
**dadurch gekennzeichnet,**
**dass** die hydrophobierte Kieselsäure einen gewichtsbezogenen Medianwert der Partikelgrößenverteilung im Bereich von 50 bis 800 nm, bevorzugt 50 bis 200 nm, aufweist.

3. Dispersion gemäß Anspruch 1 oder 2,
**dadurch gekennzeichnet,**
**dass** die hydrophobierte Kieselsäure hergestellt wurde durch Zerkleinern von Partikeln einer hydrophobierten Kieselsäure in einer Suspension, die mindestens einen Alkohol ausgewählt aus Ethanol, 1-Propanol und 2-Propanol und mindestens ein Silazan der Formel (I) oder (II)
(I) (R¹R²R³Si)₂NR⁴
(II) cyclo-(R¹R²SiNR⁴)ₘ
enthält, worin
die Reste R¹,R², R³ unabhängig voneinander Kohlenwasserstoffreste mit 1 bis 12 Kohlenstoffatomen sind,
der Rest R⁴ Wasserstoff oder Methyl ist und
m von 3 bis 8 ist.

4. Dispersion gemäß einem der Ansprüche 1 bis 3,
**dadurch gekennzeichnet,**
**dass** das Carboxyvinylpolymer mit einem Alkanolamin, vorzugsweise Tetrahydroxypropylethylendiamin, neutralisiert ist.

5. Dispersion gemäß einem der Ansprüche 1 bis 4,
**dadurch gekennzeichnet,**
**dass** das Carboxyvinylpolymer ein Copolymer ist, das als Monomereinheiten
a) Acrylsäure und/oder Methacrylsäure und
b) einen Ester von Acrylsäure und/oder Methacrylsäure mit einem C₁₋₄-Alkohol
umfasst.

6. Dispersion gemäß einem der Ansprüche 1 bis 4,
**dadurch gekennzeichnet,**
**dass** das Carboxyvinylpolymer ein quervernetztes Copolymer ist, das als Monomereinheiten
a) Acrylsäure und/oder Methacrylsäure und
b) einen Ester von Acrylsäure und/oder Methacrylsäure mit einem C₁₀₋₃₀-Alkohol
umfasst.

7. Dispersion gemäß einem der Ansprüche 1 bis 6,
**dadurch gekennzeichnet,**
**dass** die Dispersion bis zu 30 Gew.-% Wasser und zusätzlich als Haftvermittler ein Polysiloxan der Formel (III) oder (IV)
(III) (CH₃)₃SiO[(CH₃)R⁵SiO]ₙSi(CH₃)₃
(IV) cyclo-[(CH₃)R⁵SiO]ₚ
enthält, worin
die Reste R⁵ statistisch verteilt entweder Methylgruppen oder Kohlenwasserstoffreste mit 6 bis 24 Kohlenstoffatomen sind, wobei mindestens einer der Reste R⁵ nicht Methyl ist,
n von 1 bis 100 und
p von 3 bis 100 ist.

8. Dispersion gemäß Anspruch 7,
**dadurch gekennzeichnet,**
**dass** das Polysiloxan ein mittleres Molekulargewicht von weniger als 10000 g/mol, vorzugsweise weniger als 1000 g/mol, aufweist.

9. Verwendung einer Dispersion gemäß einem der Ansprüche 1 bis 8 zum Modifizieren einer Oberfläche mit hydrophobierter Kieselsäure.

10. Verfahren zum Modifizieren einer Oberfläche mit hydrophobierter Kieselsäure,
**dadurch gekennzeichnet,**
**dass** eine Dispersion gemäß einem der Ansprüche 1 bis 8 mit einem tropfenfreien Auftragsverfahren auf die Oberfläche aufgebracht wird.

11. Verfahren gemäß Anspruch 10,
**dadurch gekennzeichnet,**
**dass** die Dispersion durch Wischen mit einem Lappen oder Schwamm, durch Streichen mit einem Pinsel oder einer Bürste oder durch Rollen mit einer Auftragswalze auf die Oberfläche aufgebracht wird.

12. Verfahren gemäß Anspruch 10,
**dadurch gekennzeichnet,**
**dass** man die Oberfläche in die Dispersion eintaucht und überschüssige Dispersion ablaufen lässt.

13. Verfahren zur Herstellung einer Dispersion gemäß einem der Ansprüche 1 bis 8, umfassend
a) Zerkleinern von Partikeln einer hydrophobierten Kieselsäure auf einen Medianwert der Partikelgrößenverteilung im Bereich von 50 bis 800 nm, bevorzugt 50 bis 200 nm, in einer Suspension, die mindestens einen Alkohol ausgewählt aus Ethanol, 1-Propanol und 2-Propanol und mindestens ein Silazan der Formel (I) oder (II)
(I) (R¹R²R³Si)₂NR⁴
(II) cyclo-(R¹R²SiNR⁴)ₘ
enthält, worin
die Reste R¹, R², R³ unabhängig voneinander Kohlenwasserstoffreste mit 1 bis 12 Kohlenstoffatomen sind,
der Rest R⁴ Wasserstoff oder Methyl ist und
m von 3 bis 8 ist,
b) Herstellen einer konzentrierten wässrigen Lösung eines neutralisierten Carboxyvinylpolymers,
c) Zugabe der Lösung aus Schritt b) zu einem Medium, das mehr als 60 Gew.-% mindestens eines Alkohols ausgewählt aus Ethanol, 1-Propanol und 2-Propanol enthält, und
d) Zugabe der Suspension aus Schritt a) zu der Mischung aus Schritt c).

14. Verfahren zur Herstellung einer Dispersion gemäß einem der Ansprüche 1 bis 8, umfassend
a) Zerkleinern von Partikeln einer hydrophobierten Kieselsäure auf einen Medianwert der Partikelgrößenverteilung im Bereich von 50 bis 800 nm, bevorzugt 50 bis 200 nm, in einer Suspension, die mindestens einen Alkohol ausgewählt aus Ethanol, 1-Propanol und 2-Propanol und mindestens ein Silazan der Formel (I) oder (II)
(I) (R¹R²R³Si)₂NR⁴
(II) cyclo-(R¹R²SiNR⁴)ₘ
enthält, worin
die Reste R¹, R², R³ unabhängig voneinander Kohlenwasserstoffreste mit 1 bis 12 Kohlenstoffatomen sind,
der Rest R⁴ Wasserstoff oder Methyl ist und
m von 3 bis 8 ist, und
b) Zugabe der Suspension aus Schritt a) zu einer wässrigen Lösung eines neutralisierten Carboxyvinylpolymers.

## Claims

1. Dispersion for the modification of a surface with hydrophobized silica, comprising
from 0.1 to 25% by weight of hydrophobized silica,
from 8 to 90% by weight of at least one alcohol selected from ethanol, 1-propanol, and 2-propanol,
from 7 to 89% by weight of water,
from 0 to 30% by weight of solvents not miscible with water, and
from 0.04 to 5% by weight of at least one carboxy vinyl polymer,
where the carboxy vinyl polymer is present in neutralized form.

2. Dispersion according to Claim 1,
**characterized in that**
the median value of the particle size distribution of the hydrophobized silica, based on weight, is in the range from 50 to 800 nm, preferably from 50 to 200 nm.

3. Dispersion according to Claim 1 or 2, **characterized in that**
the hydrophobized silica has been prepared by comminution of particles of a hydrophobized silica in a suspension comprising at least one alcohol selected from ethanol, 1-propanol, and 2-propanol, and at least one silazane of formula (I) or (II)
(I) (R¹R²R³Si)₂NR⁴
(II) cyclo (R¹R²SiNR⁴)ₘ,
in which
the moieties R¹, R², and R³, independently of one another are hydrocarbon moieties having from 1 to 12 carbon atoms,
the moiety R⁴ is hydrogen or methyl, and
m is from 3 to 8.

4. Dispersion according to any one of Claims 1 to 3, **characterized in that**
the carboxy vinyl polymer has been neutralized by an alkanolamine, preferably tetrahydroxypropylethylenediamine.

5. Dispersion according to any one of Claims 1 to 4, **characterized in that**
the carboxy vinyl polymer is a copolymer comprising, as monomer units,
a) acrylic acid and/or methacrylic acid and
b) an ester of acrylic acid and/or methacrylic acid with a C₁₋₄-alcohol.

6. Dispersion according to any one of Claims 1 to 4, **characterized in that**
the carboxy vinyl polymer is a crosslinked copolymer comprising, as monomer units,
a) acrylic acid and/or methacrylic acid and
b) an ester of acrylic acid and/or methacrylic acid with a C₁₀₋₃₀-alcohol.

7. Dispersion according to any one of Claims 1 to 6, **characterized in that**
the dispersion comprises up to 30% by weight of water and additionally, as adhesion promoter, a polysiloxane of formula (III) or (IV)
(III) (CH₃)₃SiO[(CH₃)R⁵SiO]ₙSi(CH₃)₃
(IV) cyclo [(CH₃)R⁵SiO]p,
in which
the moieties R⁵, randomly distributed, are either methyl groups or hydrocarbon moieties having from 6 to 24 carbon atoms, where at least one of the moieties R⁵ is not methyl,
n is from 1 to 100, and
p is from 3 to 100.

8. Dispersion according to Claim 7,
**characterized in that**
the average molar mass of the polysiloxane is less than 10 000 g/mol, preferably less than 1000 g/mol.

9. Use of a dispersion according to any one of Claims 1 to 8 for modifying a surface with hydrophobized silica.

10. Process for the modification of a surface with hydrophobized silica,
**characterized in that**
a dispersion according to any one of Claims 1 to 8 is applied to the surface by a droplet-free application process.

11. Process according to Claim 10,
**characterized in that**
the dispersion is applied to the surface by wiping with a cloth or sponge, by spreading with a paintbrush or other brush, or by rolling with an applicator roll.

12. Process according to Claim 10,
**characterized in that**
the surface is immersed in the dispersion and excess dispersion is permitted to run off.

13. Process for the production of a dispersion according to any one of Claims 1 to 8, comprising
a) comminution of particles of a hydrophobized silica to a median value of the particle size distribution in the range from 50 to 800 nm, preferably from 50 to 200 nm, in a suspension comprising at least one alcohol selected from ethanol, 1-propanol, and 2-propanol, and at least one silazane of formula (I) or (II)
(I) (R¹R²R³Si)₂NR⁴
(II) cyclo (R¹R²SiNR⁴)ₘ,
in which
the moieties R¹, R², and R³, independently of one another are hydrocarbon moieties having from 1 to 12 carbon atoms,
the moiety R⁴ is hydrogen or methyl, and
m is from 3 to 8,
b) preparation of a concentrated aqueous solution of a neutralized carboxy vinyl polymer,
c) addition of the solution from step b) to a medium which comprises more than 60% by weight of at least one alcohol selected from ethanol, 1-propanol, and 2-propanol, and
d) addition of the suspension from step a) to the mixture from step c).

14. Process for producing a dispersion according to any one of Claims 1 to 8, comprising
a) comminution of particles of a hydrophobized silica to a median value of the particle size distribution in the range from 50 to 800 nm, preferably from 50 to 200 nm, in a suspension comprising at least one alcohol selected from ethanol, 1-propanol, and 2-propanol, and at least one silazane of formula (I) or (II)
(I) (R¹R²R³Si)₂NR⁴
(II) cyclo (R¹R²SiNR⁴)ₘ,
in which
the moieties R¹, R², and R³, independently of one another are hydrocarbon moieties having from 1 to 12 carbon atoms,
the moiety R⁴ is hydrogen or methyl, and
m is from 3 to 8, and
b) addition of the suspension from step a) to an aqueous solution of a neutralized carboxy vinyl polymer.

## Revendications

1. Dispersion pour la modification d'une surface avec une silice hydrophobée, comprenant :
0,1 à 25 % en poids de silice hydrophobée,
8 à 90 % en poids d'au moins un alcool choisi parmi l'éthanol, le 1-propanol et le 2-propanol,
7 à 89 % en poids d'eau,
0 à 30 % en poids de solvants non miscibles avec l'eau, et
0,04 à 5 % en poids d'au moins un polymère de carboxyvinyle, le polymère de carboxyvinyle se présentant sous forme neutralisée.

2. Dispersion selon la revendication 1, **caractérisée en ce que** la silice hydrophobée présente une valeur médiane en poids de la distribution de tailles de particules dans la plage allant de 50 à 800 nm, de préférence de 50 à 200 nm.

3. Dispersion selon la revendication 1 ou 2, **caractérisée en ce que** la silice hydrophobée a été fabriquée par broyage de particules d'une silice hydrophobée dans une suspension contenant au moins un alcool choisi parmi l'éthanol, le 1-propanol et le 2-propanol, et au moins un silazane de formule (I) ou (II)
(I) (R¹R²R³Si)₂NR⁴
(II) cyclo-(R¹R²SiNR⁴)ₘ
dans lesquelles
les radicaux R¹, R², R³ représentent indépendamment les uns des autres des radicaux hydrocarbonés contenant 1 à 12 atomes de carbone,
le radical R⁴ représente hydrogène ou méthyle, et
m vaut 3 à 8.

4. Dispersion selon l'une quelconque des revendications 1 à 3, **caractérisée en ce que** le polymère de carboxyvinyle est neutralisé avec une alcanolamine, de préférence la tétrahydroxypropyléthylènediamine.

5. Dispersion selon l'une quelconque des revendications 1 à 4, **caractérisée en ce que** le polymère de carboxyvinyle est un copolymère qui comprend en tant qu'unités monomères
a) de l'acide acrylique et/ou de l'acide méthacrylique, et
b) un ester de l'acide acrylique et/ou de l'acide méthacrylique avec un alcool en C₁₋₄.

6. Dispersion selon l'une quelconque des revendications 1 à 4, **caractérisée en ce que** le polymère de carboxyvinyle est un copolymère réticulé, qui comprend en tant qu'unités monomères
a) de l'acide acrylique et/ou de l'acide méthacrylique, et
b) un ester de l'acide acrylique et/ou de l'acide méthacrylique avec un alcool en C₁₀₋₃₀.

7. Dispersion selon l'une quelconque des revendications 1 à 6, **caractérisée en ce que** la dispersion contient jusqu'à 30 % en poids d'eau et également, en tant que promoteur d'adhésion, un polysiloxane de formule (III) ou (IV)
(III) (CH₃)₃SiO[(CH₃)R⁵SiO]ₙSi(CH₃)₃
(IV) cyclo-[(CH₃)R⁵SiO]ₚ
dans lesquelles
les radicaux R⁵ sont d'une manière répartie statistiquement des groupes méthyle ou des radicaux hydrocarbonés contenant 6 à 24 atomes de carbone, au moins un des radicaux R⁵ ne représentant pas méthyle,
n vaut 1 à 100 et
p vaut 3 à 100.

8. Dispersion selon la revendication 7, **caractérisée en ce que** le polysiloxane présente un poids moléculaire moyen inférieur à 10 000 g/mol, de préférence inférieur à 1 000 g/mol.

9. Utilisation d'une dispersion selon l'une quelconque des revendications 1 à 8 pour la modification d'une surface avec une silice hydrophobée.

10. Procédé de modification d'une surface avec une silice hydrophobée, **caractérisé en ce qu'**une dispersion selon l'une quelconque des revendications 1 à 8 est appliquée sur la surface par un procédé d'application sans gouttes.

11. Procédé selon la revendication 10, **caractérisé en ce que** la dispersion est appliquée sur la surface par essuyage avec un chiffon ou une éponge, par peinture avec un pinceau ou une brosse ou par cylindrage avec un cylindre d'application.

12. Procédé selon la revendication 10, **caractérisé en ce que** la surface est immergée dans la dispersion et la dispersion en excès est laissée s'écouler.

13. Procédé de préparation d'une dispersion selon l'une quelconque des revendications 1 à 8, comprenant :
a) le broyage de particules d'une silice hydrophobée à une valeur médiane de la distribution de tailles de particules dans la plage allant de 50 à 800 nm, de préférence de 50 à 200 nm, dans une suspension qui contient au moins un alcool choisi parmi l'éthanol, le 1-propanol et le 2-propanol et au moins un silazane de formule (I) ou (II)
(I) (R¹R²R³Si)₂NR⁴
(II) cyclo-(R¹R²SiNR⁴)ₘ
dans lesquelles
les radicaux R¹, R², R³ représentent indépendamment les uns des autres des radicaux hydrocarbonés contenant 1 à 12 atomes de carbone,
le radical R⁴ représente hydrogène ou méthyle, et
m vaut 3 à 8,
b) la préparation d'une solution aqueuse concentrée d'un polymère de carboxyvinyle neutralisé,
c) l'ajout de la solution de l'étape b) à un milieu qui contient plus de 60 % en poids d'au moins un alcool choisi parmi l'éthanol, le 1-propanol et le 2-propanol, et
d) l'ajout de la suspension de l'étape a) au mélange de l'étape c).

14. Procédé de préparation d'une dispersion selon l'une quelconque des revendications 1 à 8, comprenant :
a) le broyage de particules d'une silice hydrophobée à une valeur médiane de la distribution de tailles de particules dans la plage allant de 50 à 800 nm, de préférence de 50 à 200 nm, dans une suspension qui contient au moins un alcool choisi parmi l'éthanol, le 1-propanol et le 2-propanol et au moins un silazane de formule (I) ou (II)
(I) (R¹R²R³Si)₂NR⁴
(II) cyclo-(R¹R²SiNR⁴)ₘ
dans lesquelles
les radicaux R¹, R², R³ représentent indépendamment les uns des autres des radicaux hydrocarbonés contenant 1 à 12 atomes de carbone,
le radical R⁴ représente hydrogène ou méthyle, et
m vaut 3 à 8, et
b) l'ajout de la suspension de l'étape a) à une solution aqueuse d'un polymère de carboxyvinyle neutralisé.
